# EUROPEAN PATENT APPLICATION

(11) **EP 2 327 504 A1**
(43) Date of publication of application: **01.06.2011**
(21) Application number: 10192446.2
(22) Date of filing: 24.11.2010
(51) Int. Cl.: B23K 35/02

(54) **Brazing material**

(30) Priority: 25.11.2009 US 602053
(71) Applicant: Lucas-Milhaupt, Inc., Cudahy, WI 53110 (US)
(72) Inventor: Belohlav, Alan, Belgium, WI WI 53004 (US); Darling, Creed, Franklin, WI WI 53132 (US); Kick, Dean W., Oak Creek, WI WI 53154 (US)
(74) Representative: Gosnall, Toby

(57) **Abstract**

A brazing material comprising a substrate metal and a second metal, e.g., an aluminum alloy and zinc alloy, is disclosed. The zinc alloy serves as a temperature depressant to reduce the resulting liquidus point of the resulting mixture substantially below 540° C such that the resulting alloy may be used in applications where the base metals to be joined require a filler metal with a lower liquidus point. The brazing material may further include a flux, e.g., as a core or coating. The flux shall have an active temperature substantially lower than that of the liquidus point of the brazing material. The brazing material may be delivered in a variety of different forms such as strips, rings, washers, rods, wires, and other such preforms.

## Description

### CROSS-REFERENCE TO RELATED APPLICATION

This application claims the benefit of priority of U.S. Patent Application Serial No. 12/602,053, filed on November 25, 2009 and entitled *Brazing Material,* the entire contents of which are hereby expressly incorporated by reference into the present application.

### BACKGROUND OF THE INVENTION

### 1. Field of the Invention

The present invention relates generally to the field of brazing. Specifically, a preferred embodiment of the present invention relates to a unique brazing material for coupling metals and a process for making the same.

### 2. Discussion of the Related Art

As is known to those skilled in the art, brazing is a joining process whereby a non-ferrous filler metal or alloy is heated to melting temperature and distributed between two or more close-fitting parts. The molten filler metal and flux interacts with a thin layer of a base metal and then cools to form a strong, sealed joint. A wide variety of filler metals and alloys may be used. The filler metal or alloy used to join the base metals has a liquidus point (i.e., the temperature at which the metal melts to become a liquid) substantially below that of the solidus of base metals to be joined so as to ensure that the base metals are not melted during brazing.

Brazing is one of the most versatile methods of joining metals today for several reasons. For one, brazed joints are relatively strong. On nonferrous metals and steels, the tensile strength of a properly made joint will often exceed that of the metals joined. On stainless steels, it is possible to develop a joint whose tensile strength is 130,000 pounds per square inch. In addition, brazed joints are relatively ductile and thus able to withstand considerable shock and vibration. Also, brazed joints are relatively easy to make and, furthermore, are made rather rapidly. Ideally, brazing is used for joining dissimilar metals such as ferrous and non-ferrous metals and metals with widely varying melting points. Further, brazing is performed at relatively low temperatures, thus reducing the risk of warping, overheating, or melting the base metals. Finally, brazing is economical when compared with other joining processes.

Brazing involves the use of capillary action to distribute molten filler metal between the surfaces of the base metals being joined. The brazing process generally involves several distinct steps. First, the operator must ensure a good fit and proper clearance between the two base metals being joined. Second, the capillary action will only work properly if the metals are properly cleaned and, as such, the base metals must be properly cleaned prior to joining them together. Next, the parts typically must be fluxed. Flux is a chemical compound applied to joint surfaces before brazing. The flux coating serves to shield the base metal surfaces from the air, thus preventing oxide formation thereon. Then, the metals are held in position in preparation for brazing. Next, the prepared assembly is brazed, which involves heating the assembly to an appropriate brazing temperature, and flowing the filler metal through the joint. Once the joint has been created, it typically must be properly cleaned to remove any flux residue, if corrosive, and to remove any oxide scale formed during the brazing process.

A previously recognized problem has been that oftentimes the liquidus temperature of the filler metal or brazing material is too high to be used with some base materials such that use of the brazing material with the base metals will cause the base metals to melt during brazing. Needless to say, it is desirable to provide a brazing material that includes a temperature depressant, whereby the temperature depressant creates a significant temperature window between the liquid state of the brazing material and the solid state (solidus) of the base metal.

Currently, production of, for example, aluminum heat exchanger coils involves using higher temperature brazing materials, which may in turn increase the temperature and processing time. As a result of the use of increased processing temperatures, various disadvantages are experienced including, but not limited to, melting of the base metals, erosion of the base metals, and loss of flux activity. However, some lower temperature alloys have been used here with limited success, e.g., the alloy, 98Zn/2A1. While this particular alloy has a much lower temperature than the aluminum base metals in the heat exchanger assemblies, the results have not been otherwise positive. For example, if the alloy has a melting temperature below the active temperature of the standard flux that is used, the alloy will melt but not wet the base materials until the flux becomes active. Thus, this often results in rather inconsistent joint quality.

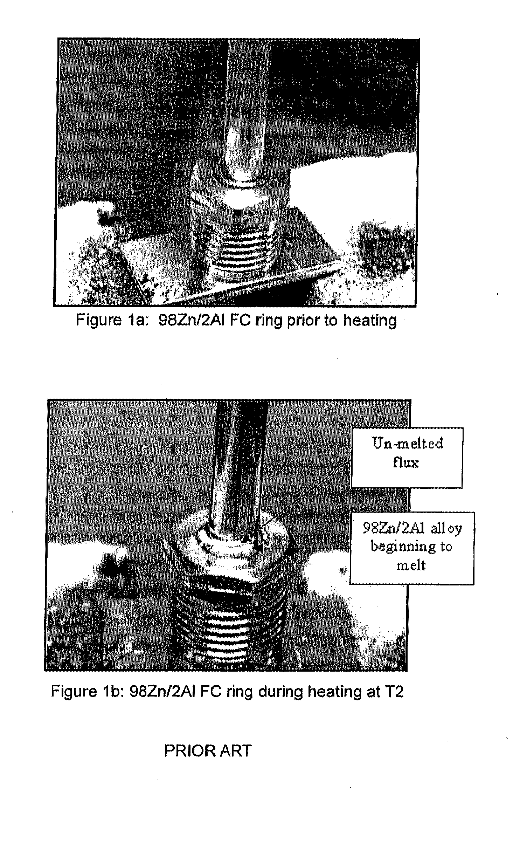

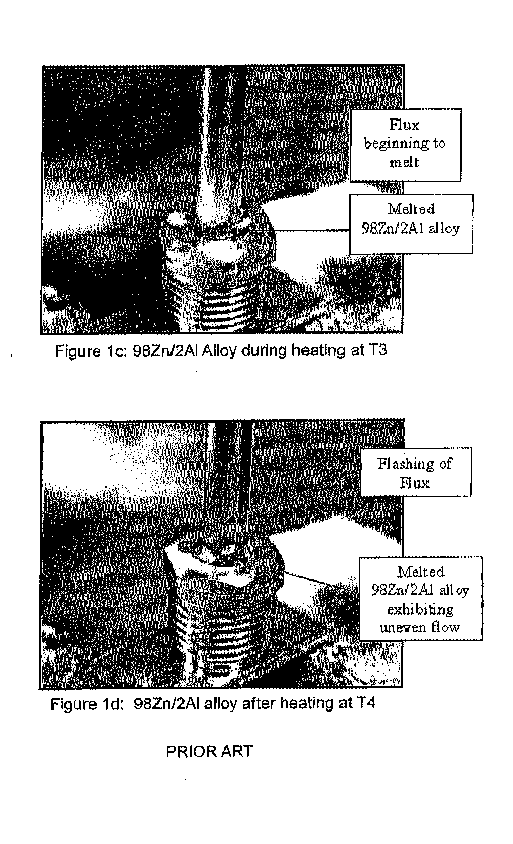

In another application, low melting zinc (Zn) alloys have been used in the past for soldering or brazing aluminum components. However, such alloys could only be used with automatic feeding or feeding by hand because the flux that was used melts at a higher temperature than the Zn alloys themselves. Thus, when these alloys have been formed into rings or other preforms, often times the alloy melts before the flux. Unfortunately, because the alloy flows first, there is no oxide protection from the flux on the base metal surface so the alloy balls up. Further, the alloy also has a tendency to flow inconsistently into the joint interface when the flux is finally active. This problem is shown in Figures 1a-1d. The resulting solder/braze joints that are produced are typically unacceptable and exhibit limited joint strength and leak integrity.

Further, high levels of Zn in a brazing filler metal can potentially cause the brazing alloy to erode some of the aluminum base metal component during heating. This erosion that takes place can affect the structural integrity of the assembly and the leak tightness of the braze joint. The degree of erosion that occurs can be affected by several factors, but the overall content of Zn in a braze alloy plays a key role. Thus, it is desirable to keep the amount of Zn in the alloy to known level, i.e., preferably a relatively low level.

It should also be noted that current brazing/soldering of aluminum evaporator coils in industry is almost solely performed with alloys in ring form because of the number of joints that need to be manufactured and the automatic brazing equipment that is utilized.

What is therefore needed is a preform Zn alloy in ring form that can be used in existing processes and machines that eliminates the issue of inconsistent alloy flow and improves the consistency of the resulting braze joint by providing a product that exhibits uniform melting of the flux followed by proper melt and flow of the brazing alloy into the joint interface. What is also needed is a brazing product that when provided in ring form, releases molten and active flux into the joint area prior to the brazing alloy melting. What is also needed is a perform containing flux that allows the molten flux to flash onto the aluminum base metal surface to properly limit oxide formation and remove oxides present on the aluminum. What is further needed is an alloy containing aluminum (Al), zinc (Zn) and silicon (Si) that when it begins to melt will flow uniformly into the braze joint forming a sound bond.

What is also needed is a brazing material for use in applications requiring a window of temperature between the solidus point of the base metals and the liquidus temperature of the brazing material. In addition, what is needed is a brazing material that could take different forms including a strip, wire, flux coated or flux cored product, rings, or other such preforms. Furthermore, what is needed is a brazing material that is capable of having a liquidus point range of 600° F and 1080° F (315° C and 582° C). Heretofore, these requirements have not been fully met without incurring various disadvantages.

### SUMMARY AND OBJECTS OF THE INVENTION

By way of summary, the present invention is directed to a brazing material preferably comprised of an aluminum alloy coupled to zinc or zinc alloy for use in brazing processes. An effect of the present invention is to provide a brazing material for use in applications requiring a window of temperature between the solidus point of the base metals to be joined and the liquidus of the brazing material contemplated herein.

One object of the invention is to provide a brazing material having a range of liquidus temperatures between 600° F and 1080° F (315° C and 582° C), but still at a temperature to allow for a melting range above that of the flux used. Another object of the invention is to provide a brazing material capable of taking on different forms, such as a strip, wire, ring, washer, rod and other types of preforms known in the relevant art. Such performs may be coated or cored with anti-oxide agent, e.g., a flux. Yet another object is to produce a brazing material that is economical and easy to fabricate and use.

Another object of the present invention is to provide a brazing material that may be configured for use in different applications. For example, for use in certain applications, the aluminum alloy of the brazing material may be coupled to the zinc on just one side thereof Alternatively, it may be desirous to provide a brazing material where the aluminum alloy is coupled on both sides so that the zinc or zinc alloy is sandwiched between two layers of the aluminum alloy. Further, the aluminum alloy may be in the middle and the zinc is on both sides.

In accordance with a first aspect of the invention, these objects are achieved by providing a brazing material comprising a substrate metal and a second metal, preferably, an aluminum alloy, zinc or zinc alloy coupled thereto by, for example, coating, wrapping, or cladding, and a flux. The brazing material may possess a flux core or, alternatively, may include a flux coating. The final composition of the brazing material should preferably include enough zinc so as to reduce the liquidus temperature of the brazing material below 582° C. Although the preferably clad zinc and aluminum alloys comprise separate components at ambient temperatures, during the brazing process the two begin to alloy to one another. As such, when the zinc begins to melt, it takes some of the aluminum alloy into itself. As the temperature continues to increase, the zinc and aluminum alloy completely alloy together to form a brazing filler material with a melting temperature higher than the flux placed on the other side of the cladding and lower than the base material being brazed. In an alternative embodiment, a material other than zinc may be used as the temperature depressant. In yet another embodiment, a material other than aluminum may be used.

In yet another aspect, where the brazing material is provided in a wire form and the like, the aluminum alloy may be circumferentially coupled to the zinc alloy.

Still another aspect of the invention is to provide a brazing material for use with torch, induction, furnace, or other heating methods that are performed in open air and require the use of a flux and a low melting braze alloy that melts above the active melting point of the flux used but still provides an alloy melting point significantly below that of the base materials being joined.

Another object of the invention is to provide a method that can be used to create the brazing material described herein.

Another aspect of the invention is to control the amount of key alloys, e.g., Zn, in the overall brazing composition to achieve the optimal braze quality and strength.

These, and other aspects and objects of the present invention, will be better appreciated and understood when considered in conjunction with the following description and the accompanying drawings. It should be understood, however, that the following description, while indicating preferred embodiments of the present invention, is given by way of illustration and not of limitation. Many changes and modifications may be made within the scope of the present invention without departing from the spirit thereof, and the invention includes all such modifications.

### BRIEF DESCRIPTION OF THE DRAWINGS

A clear conception of the advantages and features constituting the present invention, and of the construction and operation of typical embodiments of the present invention, will become more readily apparent by referring to the exemplary, and, therefore, non-limiting, embodiments illustrated in the drawings accompanying and forming a part of this specification, wherein like reference numerals designate the same elements in the several views, and in which:
FIGS. 1a-1d is a prior art brazing material and method;
FIG. 2a illustrates a side view of one embodiment of the brazing material of the present invention;
FIG. 2b illustrates a cross-sectional view of the brazing material of FIG. 2a;
FIG. 2c illustrates a cross-sectional view of another embodiment of the brazing material according to the present invention;
FIG. 3 illustrates a cross-sectional view of another embodiment of the brazing material according to the present invention;
FIG. 4a illustrates yet another embodiment of the material according to the present invention;
FIG. 4b illustrates still another embodiment of the material according to the present invention;
FIG. 5 illustrates yet another embodiment of the material according to the present invention shown in cross-section;
FIG. 6 illustrates still another embodiment of the material according to the present invention shown in cross-section;
FIG. 7 illustrates yet another embodiment of the material according to the present invention shown in cross-section;
FIG. 8 illustrates a partial perspective view of still another embodiment of the material according to the present invention;
FIG. 9a illustrates a perspective view of a ring form of another embodiment of the brazing material according to the present invention;
FIGS. 9b and 9c show yet another embodiment of the brazing material according to the present invention;
FIGS. 10-12 illustrate the use of one form of the invention;
FIGS. 13 is a diagram illustrating two metals alloying together as in the present invention;
FIG. 14 is a flowchart showing a method of manufacturing the brazing material of the present invention;
FIG. 15 illustrates yet a further embodiment of the invention;
FIG. 16 illustrates one application of the invention shown in FIG. 15;
FIG. 17 illustrates application of a known brazing material;
Fig. 18 illustrates still a further embodiment of the invention; and
Fig. 19 illustrates a known brazing material.

In describing preferred embodiments of the invention, which are illustrated in the drawings, specific terminology will be resorted to for the sake of clarity. However, it is not intended that the invention be limited to the specific terms so selected and it is to be understood that each specific term includes all technical equivalents, which operate in a similar manner to accomplish a similar purpose. For example, the words "connected", "attached", "coupled", or terms similar thereto are often used. They are not limited to direct connection but include connection through other elements where such connection is recognized as being equivalent by those skilled in the art.

### DESCRIPTION OF PREFERRED EMBODIMENTS

### 1. Resume of the Invention

The current invention provides a way of producing a brazing alloy product, for example, an A1/Zn/Si product, with a flexible range of Zn use that is controlled and limited by the content and location of the Zn within the product. This control of the Zn element in the present invention also can play a role in the corrosion resistance of the resulting braze joint. In the past, high content Zn alloys typically exhibited less corrosion resistance than Al based alloys. Moreover, as the level of Zn in the alloy increases, the degree of corrosion resistance decreases. Because the content of Zn can be controlled in the brazing product, various compositions are possible depending on application requirements.

As known in the prior art, there is only a limited availability of Zn alloys that melt above melting temperature of a flux. Therefore the present invention couples a Zn bearing alloy and Al alloy to form a final alloy that melts at a temperature above the solidus point of the flux used but significantly below the solidus of the base metals being joined. The present invention also suggests appropriate methods of coupling the two alloys together and incorporating flux into the product.

The present invention further addresses the problem of inconsistent coating or contact between materials by, for example, providing a sufficient flux to alloy ratio. In another embodiment, this is done by cladding one alloy to another alloy to provide intimate contact between the metals, e.g., the Al and Zn alloys, followed by coring flux into the formed wire. The present invention also provides a brazing product that does not require the material be directly coated or clad onto a base metal substrate such as seen in the prior art with clad brazing sheet. Rather, the invention provides a brazing product that is completely separate from the base metal substrate prior to brazing, allowing direct bonding to take place between the two base metal components without the use of an intermediary substrate surface.

### 2. Detailed Description of the Preferred Embodiments

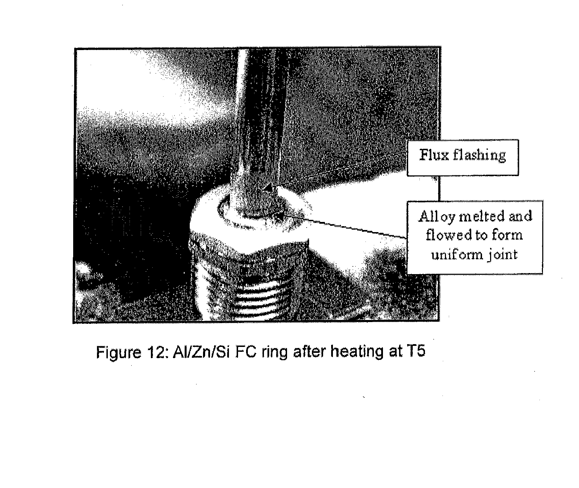

Referring now to the drawings FIGS. 1a-14, and specifically to FIGS. 1a-1d, FIGS. 1a-1d show a prior art brazing material and method that, as discussed above, is inadequate for certain operations.

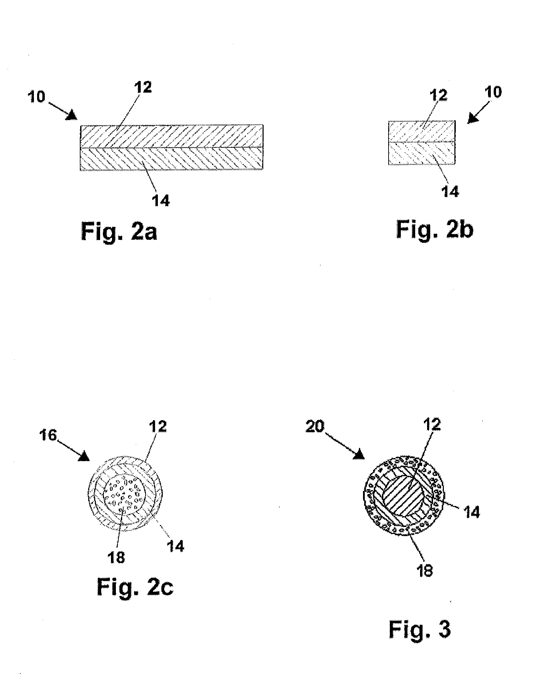

FIGS. 2a and 2b, a first embodiment of the brazing material of the present invention is shown. Specifically, FIG. 2a shows a side view of a brazing material, e.g., strip 10 according to the present invention includes a substrate metal, e.g., a zinc alloy 12 and a second metal, e.g., an aluminum alloy 14 coupled thereto. FIG. 2b shows a front view cross-section of the brazing material of FIG. 2a. Although the present embodiment discloses the use of a zinc alloy, it is understood that, alternatively, pure zinc or other temperature depressing materials may be used in the various embodiments of the present invention disclosed herein. Likewise, although an aluminum-silicon alloy is preferred, other alloys may be used in the various embodiments described herein. Examples of such alternative temperature depressant materials and filler materials will be further discussed below.

The aluminum alloy 14 and the zinc alloy 12 in this embodiment may be coupled by at least wrapping, cladding, or coating. However, for the purposes of this disclosure, the term "coupled" is understood to contemplate a wide variety of relationships between two or more materials, such as abutting, adjoining, touching, linking, contacting, bonding, wrapping, attaching, connecting, coating, cladding, plating, and the like. In fact, the coupling of the aluminum alloy and the zinc alloy of the present invention takes on many different forms that depend on the application of the brazing material. For example, in some embodiments, such as when the brazing material is supplied in the form of a strip, as shown here, the coupling may be done by cladding on only one side of the zinc alloy.

Various ranges for the final composition of the brazing material or mixture ("mixture" is defined as the resulting alloyed braze material in liquid or solid form) are contemplated, and representative compositions are listed below. The following compositions are displayed by weight %:
Al: 30% +/- 20%
Si: 5% +/-5%
Zn: 70% +/- 20%
Other elements: 5% +/-5%

With one preferred embodiment being:
Al: about 40 %
Si: about 5%
Zn: about 55%
Other elements: <0.5%; and

Another preferred embodiment being:
Al: about 18%
Si: about 3%
Zn: about 79%
Other elements: <0.5%
The above-disclosed compositions are not meant to be limiting, and as such, other compositions may be used. Although zinc and aluminum alloys are preferred, as stated previously, other materials may be used as long as the resulting composition achieves a liquidus point temperature between 600° F and 1080° F (315° C to 582° C).

In the one preferred embodiment, the two components, the zinc alloy 12 and aluminum alloy 14, remain two separate components at ambient temperatures. However, during the brazing process, the zinc alloy 12 and aluminum alloy 14 begin to come together. When the zinc begins to melt, some of the aluminum alloy mixes into the zinc alloy solution. As the temperature increases, the zinc alloy and aluminum alloy will completely melt or alloy together to form a brazing mixture and resulting material with a melting temperature lower than the aluminum alloy but higher than the zinc alloy. Preferably, the final composition should comprise enough zinc so as to bring the liquidus temperature of the resulting mixture below 540° C, e.g., preferably about 488° C. Specifically, a window of temperature between that of A1 718 and the zinc-coated aluminum alloy is preferred.

In one preferred embodiment, the aluminum alloy preferably comprises one of the following: AMS 4185D, AWS A5.8 BalSi-4, Aluminum Association AA 4047, or Lucas-Milhaupt's Al 718 (e.g., 88% Al, 12% Si). In general, the Al alloy's composition is:
Al: 80% +/- 20%
Si: 20% +/-20%

The zinc alloy's composition preferably comprises one of the following:
Zn: 80% +/- 20%
Al: 20% +/- 20%
Other elements: 20% +/-20%
Or
Zn: 98% +/- 1%
Al: 2% +/- 1%
Other elements: ≤0.02% (This is referred to commercially as Lucas-Milhaupt, Inc.'s Al 802).

As mentioned, the aforementioned zinc and aluminum alloys are not meant to be limiting and other such zinc and aluminum alloys are contemplated and may be used to practice the present invention. Furthermore, as disclosed previously, metals other than zinc alloys and an aluminum-silicon alloy are contemplated and are therefore within the scope of the present invention. For example, tin or cadmium may be used. These metals, like the zinc alloy, act as a temperature depressant to the bracing material.

In one preferred embodiment, a silver alloy may be used as a substrate metal. Such a metal is Br300 and is available from Lucas-Milhaupt, Inc. A nickel alloy is then preferably coupled to this silver alloy to provide a brazing material.

Alternatively, another composition of the final braze mixture may be:
Ag/Cu/Zn/Ni alloy:
   Ag 25+/- 25%
   Cu 30+/- 15%
   Zn 20 +/- 15%
   Ni 5+/- 5%
   Others 5+/- 5%

As mentioned, the present invention may take many forms. However, in one preferred embodiment, the clad alloy strips of the present embodiment preferably have thicknesses of 0.002 in. ― 0.050 in. (.005 - .127 cm) and widths of at least 0.025 in. ― 1.5 in (.0635 - .38 cm). In alternative embodiments where the final product comprises a wire or the like, the wire preferably has diameters of at least 0.010 in. ― 0.375 in. (.025 - .953 cm). While the aforementioned measurements represent the preferred measurements for the brazing material, it is understood that alternative thicknesses and diameters are contemplated and within the scope of the present invention.

The brazing material disclosed herein will lower the liquidus temperature and may lower the time required to braze, for example, with aluminum heat exchanger coils, thereby reducing the chance of melting the base materials being joined. Furthermore, the material disclosed herein will flow more freely and produce much more consistent joints compared with other low temperature brazing materials because the alloy melts after the flux has already become active. Along with providing a very desirable brazing temperature range, the material of the present invention can be used with existing assemblies and processes.

Referring now to FIG. 2c, another embodiment of the present invention is shown wherein the brazing material is in the form of a flux cored wire 16. At the center of the wire 16 is a flux 18 that is immediately surrounded by an aluminum alloy layer 14 and an outer coupled layer consisting of zinc alloy 12. Here the metals are preferably just wrapped around each other. Thus, in the flux-cored product of FIG. 2c, the flux 18 is preferably encapsulated inside the wire as described in U.S. Patent No. 6,830,632, which is hereby incorporated by reference. However, the flux core may be enclosed inside the clad strip by other methods generally known in the art.

The flux 18 is preferably cesium-based with an active temperature below that of the liquidus point of the brazing material. A representative product chemistry for the flux 18 for use with the brazing material of the present invention is disclosed below:
Aluminum: 10% +/-5%
Cesium: 50% +/- 30%
Fluoride: 20% +/- 15%.

The flux 18 may be in a powder form that is preferably encapsulated in the wire or held together by a binder. In one embodiment, the binders are polymeric binders, preferably propylene carbonate binders, and even more preferably such polymers are in the form of aqueous emulsions. One preferred binder is *QPAC*-40 TM from PAC Polymers. The binder is described in detail in U.S. Patent No. 6,248,860 incorporated herein by reference.

Alternative flux compositions are contemplated and within the scope of the present invention,e.g., NOCOLOK® flux from Solvay Fluor which includes K, Al, F, Fe, Ca, and LOH. In fact, as long as a flux has an active temperature below that of the liquidus of the resulting brazing mixture or material, that flux may be used to practice the present invention. The key again being that the brazing metals of the present invention melt after the flux has already become active rather than before.

In some embodiments, the zinc cladding, coating, or the like is on only one side of the aluminum. There, the flux is preferably placed on the side opposite of the zinc cladding. This ensures that the zinc is on the opposite side of the flux and thus limits the potential for any adverse reaction between zinc and flux. It also may temporarily shield one or the other from heat.

Turning now to FIG. 3, the brazing material product of the present invention is shown wherein it is in the form of a wire 20. Wire 20 consists of a zinc alloy core 12, a middle aluminum alloy layer 14, and an outer flux layer 18. In one embodiment of such a wire 20, the metals 12, 14 are co-extruded and then coated with a sprayable flux 18. Alternatively, the flux could also be co-extruded with the metals.

Alternative final forms for the brazing material disclosed herein are also contemplated. For instance, the brazing material could take on the form of a strip, washer, rod, wire, rings, and various other preforms generally known in the art. Furthermore, the various forms could be either flux coated, flux cored, or otherwise separated from the flux itself.

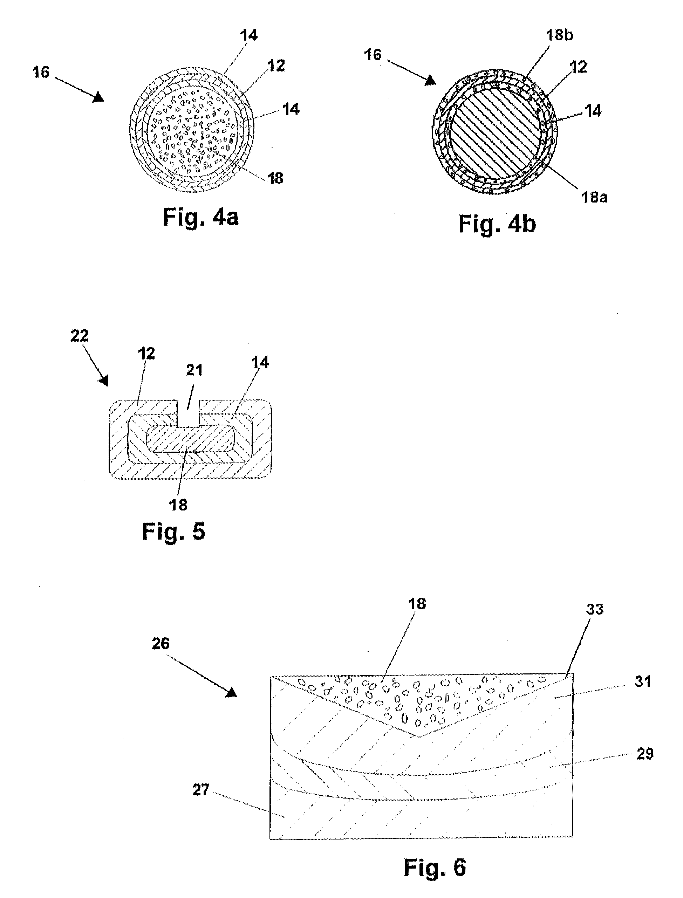

As shown in FIG. 4a, when desired, the zinc alloy 12 may be sandwiched between two layers of the aluminum alloy 14 with the flux 18 being in the core of such an arrangement. The layers 14, 12, 14 here may be circumferentially coupled together, for example, by "double cladding." Alternatively, other metals may be sandwiched together in such an arrangement, e.g., the aluminum alloy may be sandwiched between two layers of the zinc alloy (not shown).

As shown in FIG. 4b, the zinc alloy 12 may be in the form of a wire. Coupled to the zinc alloy wire 12 is an aluminum alloy 14. However, preferably between the Al alloy 14 and the Zinc alloy wire 12 is a flux layer 18a. Another flux layer 18b is then preferably added to the outside of the A1 layer 14.

FIG. 5 shows an additional form of the invention. The brazing material takes a generally U-shaped form 22. The form 22 typically contains a first metal 12 surrounding a second metal 14. A channel 21 or gap separates the end of the bent metals. A flux 18 is then preferably poured in liquid form into the channel 21 and it hardens. Of course, in this configuration, additional layers of the metals and flux may be added. It is also possible for one of the metals to be joined, e.g., by sintering, to a powered metal to form such a configuration. In such an embodiment, a powdered flux 18 then may be packed into the center of the metals.

FIG. 6 shows a multi-layered configuration of an inventive brazing material 26. The strip 26 has a first material layer 27, a second material layer 29, and a third material layer 31. The layers are then configured, e.g., bent, to form a groove or a channel 33. Flux 18 is then added to that channel 33. The channel 33 may also be machined into the strip 26. For example, the channel 33 could be first cut with a die into material 31, e.g., a 1/8^{th} inch strip of zinc. Then the other materials 29 and 27 then would be added. Finally, the flux 18 would be provided. The materials are preferably different metals and are preferably coupled, e.g., by coating with a thermal spraying process. The flux is preferably a powered flux 18 that is packed into the channel 33. While thermal spray coating is used here, other various technologies generally known in the art exist for "cold" coating of materials. It should be noted that combinations of coupling may be used, for example, one layer may be coated onto another, and then the next layer may be clad, and then finally a third layer may be wrapped.

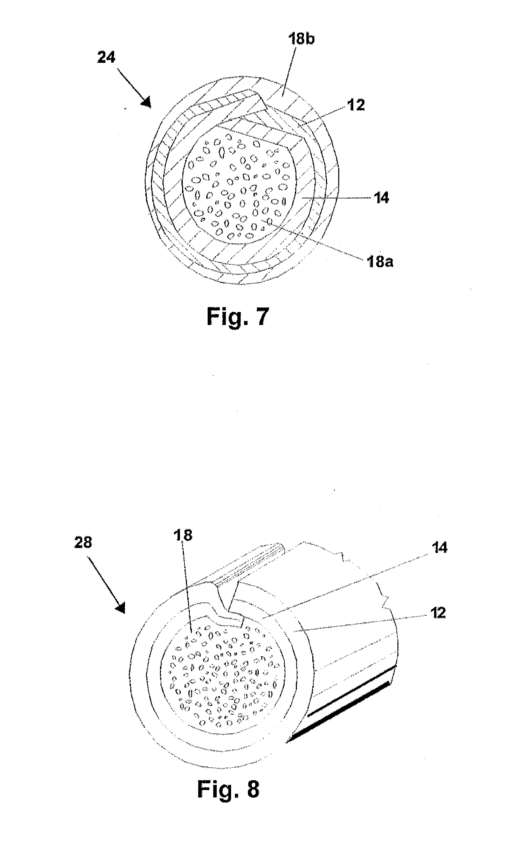

FIG. 7 shows yet another configuration of the wire 24. Here a flux 18a is wrapped up by a metal 14 and another metal 12. An additional layer of flux 18b is then added, e.g., by coating to the outside.

FIG. 8 shows yet another possible configuration of an inventive brazing material 28. Here flux 18 is surrounded by metal 14. Metal 12 then is added around the flux 18 and the metal 14 by wrapping. When metal 12, e.g., an aluminum alloy, is on the outside of a zinc alloy, it encapsulates the zinc alloy to prevent the zinc alloy (14) from eroding the base metal when heat is applied.

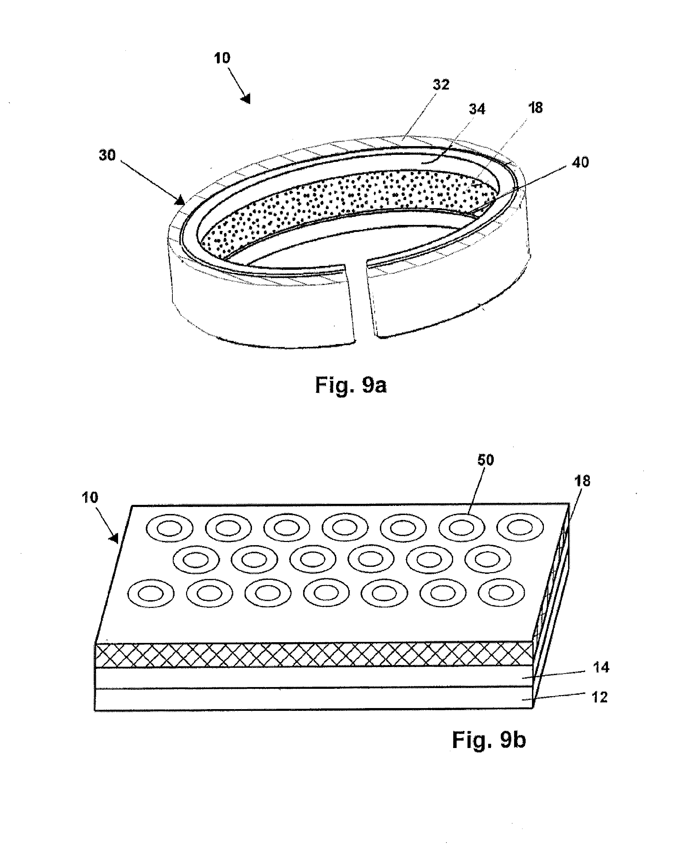

FIG. 9a shows another configuration of the inventive brazing material 10. The brazing material is a preformed ring 30. The ring has one layer of a first metal 32 and second layer of a second metal 34. A groove 40 is in the center of the ring 30. Flux 18 is deposited in the groove 40. In this embodiment, zinc or zinc alloy is preferably the outermost metal 32. The zinc helps to get the reaction going once heat is applied to the ring 30. As the zinc begins to melt, it speeds the melting of the second metal 34, e.g., aluminum.

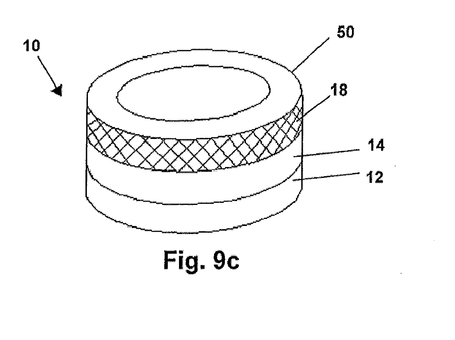

Other embodiments of the invention include a flux coated form. As shown in FIG. 9b, the inventive braze material may be stamped with washers 50. FIG. 9c shows one such stamped washer 50. Here, two metals, 12 and 14, are provided. The flux 18 here is preferably a coating.

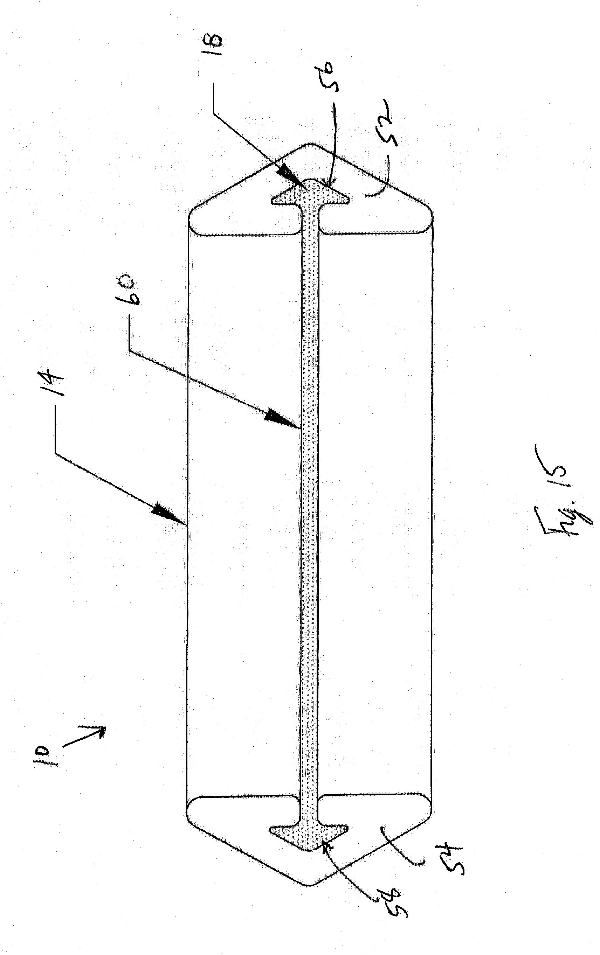

FIG. 15 shows another configuration of the inventive brazing material 10. In this embodiment, flux 18 is surrounded by metal 14. The metal 14 is shaped to have a triangular shaped body defined by triangular shaped ends 52, 54. The ends 52, 54 are each formed to define a respectively triangular shaped cavity 56, 58. A channel 60 extends along the interior surface of the body and is open to each cavity 56, 58. In this regard, the flux 18 is contained in each of the cavities 56, 58 and the channel 60.

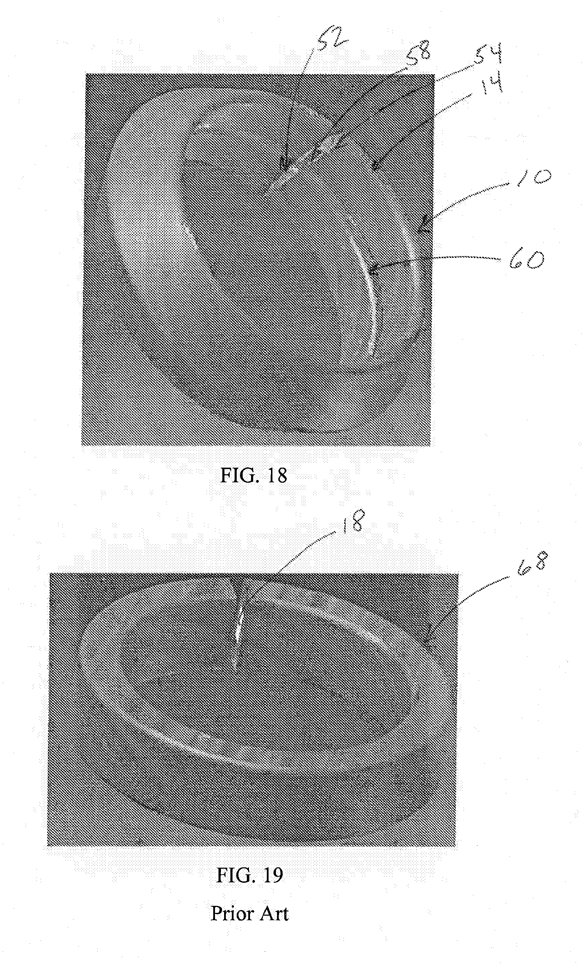

Referring now to FIG. 18, the metal 14 is shown made into a ring with the gap between the ends 52, 54 of the metal 14 facing toward the inside diameter of the ring. This construction allows the flux 18 to be retained in the metal 14 without the use of a binder. As known in the art, binders do not burn cleanly and often leave residues on and within the braze joint that may impede proper alloy and flux flow resulting in poor braze joint quality.

Various ranges for the final composition of the brazing material shown and described with respect to FIG. 15 are contemplated, and representative compositions are listed below. The following compositions are displayed by weight %:
A) Al: 30% +/- 20%
   Zn: 70%+/-20%
   Other elements: 5% +/-5%
   With a preferred embodiment being:
   Al: about 22 %
   Zn: about 78%
   Other elements: <0.5%
   i.e. AL 822
B) Al: 85% +/- 10%
   Si: 15% +/- 10%
   Other elements: 5% +/-5%
   With a preferred embodiment being:
   Al: about 88 %
   Si: about 12%
   Other elements: <0.5%
   i.e. Al 718 (AWS BAISi-4)
C) Al: 40% +/- 20%
   Si: 5% +/-5%
   Zn: 60% +/- 20%
   Other elements: 5% +/-5%
   With a preferred embodiment being:
   Al: about 40 %
   Si: about 5%
   Zn: about 55%
   Other elements: <0.5%

### 3. In Use and Operation

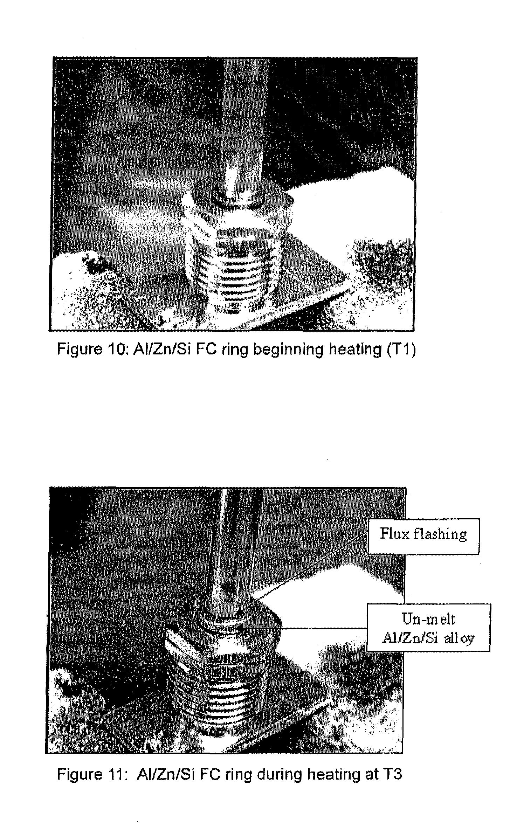

The appropriate melting and flow stages that are produced by this embodiment of the invention are shown in FIGS. 10-12. Rather than provide specific temperatures, T1, T2, etc., are used as shown.

An example of temperature difference between high Zn alloys and flux (e.g., the prior art shown in FIGS. 1a-1d)) and the inventive AlZnSi alloy (55) and flux is as follows:
The typical process temperatures with high Zn alloy:
   Step 1: T 1 = initial heating is applied;
   Step 2: T2 = melting of Zn alloy occurs;
   Step 3: T3 = melting of flux occurs;
   Step 4: T4 = afer heating is applied;
   Note here T_{Zn} Alloy < T_{Flux} < T_{Base} Metal.

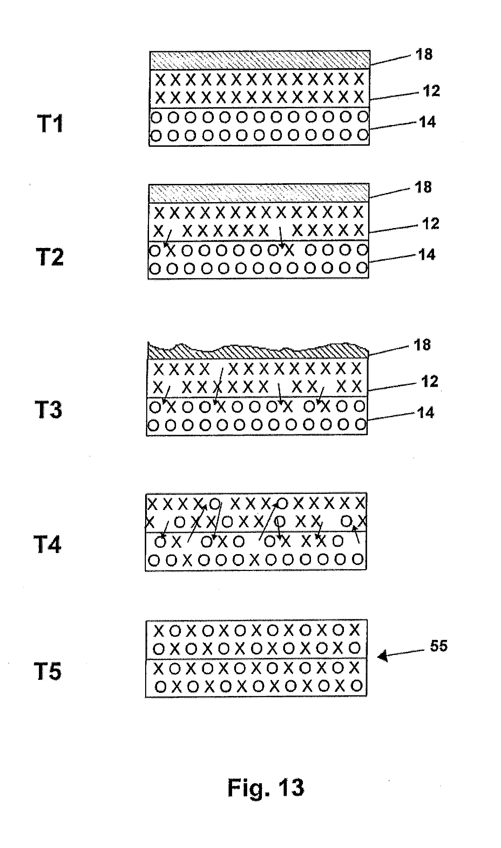

FIG. 13 is diagram illustrating what happens during heating when the Al and Zn materials alloy together.
The typical process temperatures with the inventive AlZnSi alloy 55:
Step 1: T1 = initial heating;
Step 2: T2 = melting of Zn alloy in the ring;
Step 3: T3 = melting of flux;
Step 4: T4 = melting of AlZnSi alloy;
Step 5: T5 = after heating is applied;
T_{Zn Alloy} < T_{Flux} < T_{Base Metal}
T_{Flux} < T_{AlZnSi Alloy} < T_{AlSi Alloy} < T_{Base Metal.}
Thus, as is illustrated here, the Zn alloy acts as a temperature depressant so that new AlZnSi alloy has an active melting temperature that is less than the original AlSi alloy contained in the brazing material, e.g, a ring. Again, temperature control and alloy/flux composition is key here.

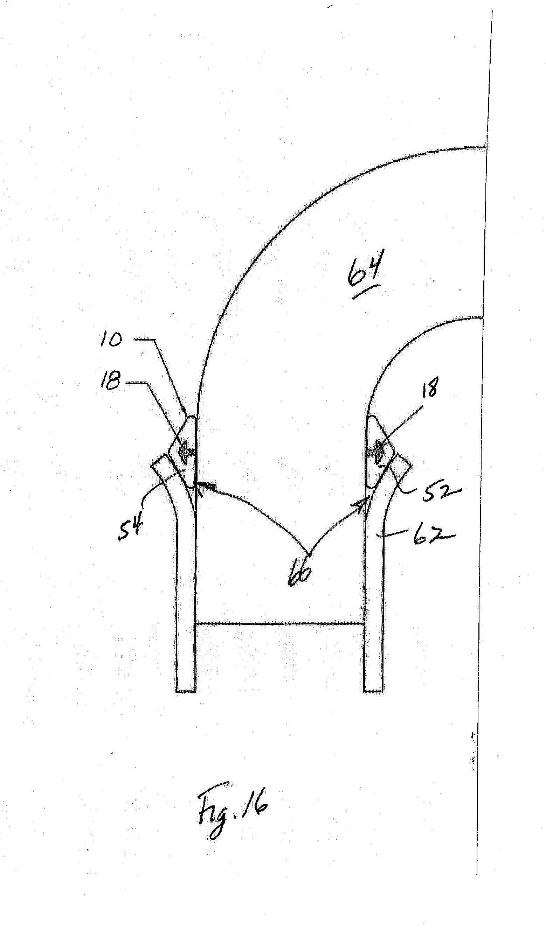

FIG. 16 illustrates one application of the brazing material 10 shown in FIG. 15. In this representative application, the brazing material is being used with the production of aluminum heat exchangers. For production of aluminum heat exchanger coils, the common braze joint is created between a hairpin 62 and a bent aluminum pipe 64. The joint 66 between the hairpin 62 and the pipe 64 should be hermetic/leak tight with little to no voids existing in between the two components being brazed. The present invention helps ensure production of a sound braze joint more efficiently than conventional brazing materials.

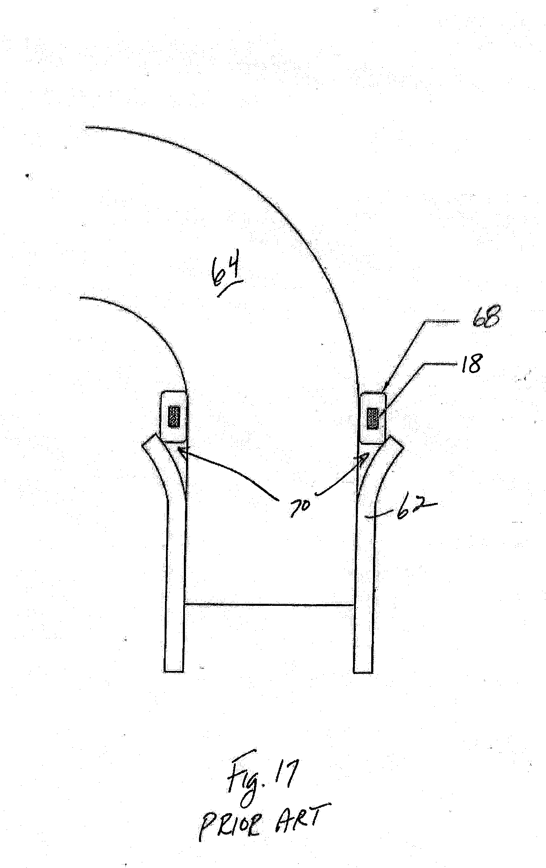

Conventional brazing materials suited for brazing a joint between hairpin 62 and pipe 64 will often have a rectangular, oval, or round cross-sectional geometry in ring form that is then attached to the bent pipe of the heat exchanger. With brief reference to FIGS. 17 and 19, a conventional brazing material 68 in the form of a ring having a rectangular cross-sectional geometry is shown. With the pipe 64 inserted into the hairpin 62, the ring 68 sits on the edge of the joint 70, as shown in FIG. 17. This poses a significant disadvantage for brazing because as the assemblies are heated the braze ring 68 is exposed to direct heat and the alloy and flux will often melt and flow away from the joint interface leaving lack of alloy fill and voids. Additionally, it is not uncommon for the ring 68 to completely fall off of the pipe 64 and hairpin 62 during heating due to limited contact between the pipe and hairpin leaving no alloy and flux present to produce.

As shown in FIG. 16, the triangular brazing ring shown in FIG. 15, is believed to eliminate this disadvantage because the geometry and manufacture of the wire ring allows the braze material to seat more effectively in between the pipe 64 and the hairpin 62. One skilled in the art will appreciate that the invention provides intimate contact between the alloy ring 10, hairpin 62, and pipe 64 thereby providing better heat transfer and allowing proper brazing to take place on a more consistent basis. In particular, the shape of brazing ring 10 serves as a directional guide, and the surface tension provided serves to pull the alloy into the joint. Further, the ring 10 is less likely to split upon melting and therefore avoids having alloy fall outside of the joint resulting in more consistent and better joint quality. This intimate contact not only allows the brazing alloy and flux to flow into the joint 66 consistently, but it also limits direct heat on to the braze ring limiting premature melting of the alloy and flux. Additionally, the hairpin 62 provides a mechanical resistance to the braze alloy ring 10 thereby not allowing the ring to move outside of the joint area.

Additionally, the geometry and manufacture of this embodiment of the invention allows exposure of the flux to the joint interface without the need to use a binder, which, as described above, can lead to weak joints. As such, being free of binder, the alloy and flux can flow cleanly and freely into the joint interface to create a sound braze. Binder free flux additionally provides clean, white joints devoid of undesirable binder residuals such as black spots within the joint, which may appear to be leaks. Thus, visual inspection of joints made with a flux including a binder is more difficult than where no binder is used.

Compared to a standard round wire or rectangular preform overall surface contact between ring and assembly is increased by at least 20-30%. Increased contact area increases conduction of heat between base materials and the perform allowing for more uniform heating of the alloy to the base materials. This leads to a more thorough and robust joint.

In addition, the triangular shape of ring 10 is more rigid as compared to standard round wires and rectangular performs. The increased rigidity reduces the ring's tendency to open up which in turn provides greater retention on the return bend. Further, the profile of the strip used to produce the ring improves the manufacturability of the ring. The material is less likely to have edge cracks than in standard round wires and rectangular performs, and therefore the manufacturing process is more consistent, and it is easier to achieve predetermined quality targets. The material also has a more consistent weight and flux makeup as compared to the prior art materials.

A number of different metals may be used in the construction of the ring 10 of the present embodiment. For instance, ring 10 may include a 78Zn/22 Al alloy, AL718, and a number of brazing alloys.

### 4. Method of Manufacture

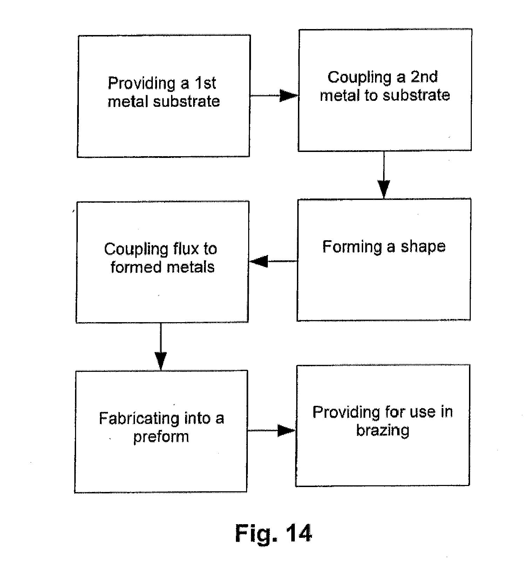

FIG. 14 shows a preferred method of making a brazing material. The method includes the step of first providing a substrate metal, e.g., an aluminum alloy comprising aluminum and silicon. Next, the method includes the step of coupling a second metal, e.g., zinc alloy, to the aluminum alloy, wherein the zinc alloy is coupled to at least one side of the aluminum alloy. A second coupling step occurs wherein a flux is coupled to the metals. This step may include an encapsulating step wherein the flux is encapsulated in a core of the brazing material. In another embodiment, a coating step is provided to apply flux to the brazing material.

In another embodiment, the first coupling step includes one of: coating the zinc alloy onto the aluminum alloy, wrapping the zinc alloy onto the aluminum alloy, and cladding the zinc alloy onto the aluminum alloy. Further, a fabricating step may be provided, wherein the brazing material is fabricated into the form of one of: a strip, wire, washer, rod and ring, and other preform.

Additional fabricating may be required to produce the desired form. For example, stamping, scraping, extruding, sintering, or billeting may be used. Also, machining may be required to form a groove for the second material and/or flux.

There are a number of manufacturing advantages presented by the triangular form versus traditional rectangular cross-sectioned rings. For example, the triangular ring is easier to make and results in less scrap. Further, the rings constructed are easier to round into shape and therefore result in rounder rings.

There are virtually innumerable uses for the present invention, all of which need not be detailed here. Additionally, all the disclosed embodiments can be practiced without undue experimentation. Further, although the best mode contemplated by the inventors of carrying out the present invention is disclosed above, practice of the present invention is not limited thereto. It will be manifest that various additions, modifications, and rearrangements of the features of the present invention may be made without deviating from the spirit and scope of the underlying inventive concept, see for example, the configurations and materials discussed in pending application U.S. Publication No. 2007/0272334 and pending application U.S. Publication No. 2007/0251602, herein both incorporated by reference.

Strip or round wire is flattened send through rolls shaped in v-shaped channel and than powered flux added into center of v-shaped wire.

In addition, the individual components of the present invention discussed herein need not be fabricated from the disclosed materials, but could be fabricated from virtually any suitable materials. One example is the flux. Any oxide prevention substance may be used instead of flux. Moreover, the individual components need not be formed in the disclosed shapes, or assembled in the disclosed configuration, but could be provided in virtually any shape, and assembled in virtually any configuration. Furthermore, all the disclosed features of each disclosed embodiment can be combined with, or substituted for, the disclosed features of every other disclosed embodiment except where such features are mutually exclusive.

It is intended that the appended claims cover all such additions, modifications, and rearrangements. Expedient embodiments of the present invention are differentiated by the appended claims.

## Claims

1. A brazing material comprising:
a body having a triangular shaped cross-section defined by triangular shaped ends that define a triangular shaped cavity and comprising:
a substrate metal; and
a flux coupled to the substrate metal.

2. The brazing material of claim 1, wherein the brazing material is used in at least one of the following: an open air environment, torch brazing, induction brazing, an uncontrolled atmosphere, and a furnace without control atmosphere.

3. The brazing material of claim 1 or 2, wherein the substrate metal is one of:
aluminum and an aluminum alloy.

4. The brazing material of claim 3, wherein the aluminum alloy comprises aluminum and silicon.

5. The brazing material of any preceding claim, further comprising a second metal coupled to the substrate metal and configured to alloy with the substrate metal when the brazing material is heated and results in a mixture having a liquidus temperature substantially lower than that of the substrate metal, wherein the second metal is one of: pure zinc and a zinc alloy.

6. The brazing material of any preceding claim, wherein the flux is encapsulated to form a core of the brazing material.

7. The brazing material of any preceding claim, wherein the flux is coupled to an outside surface of the brazing material.

8. The brazing material of any preceding claim, wherein the liquidus temperature of a mixture is less than 540° C.

9. The brazing material of claim 8, wherein the liquidus temperature of the mixture is greater than 315° C.

10. The brazing material of claim 2, wherein the flux has an active temperature below that of the liquidus temperature of a mixture.

11. The brazing material of any preceding claim, further comprising another layer of the aluminum alloy coupled to the second metal.

12. A brazing material comprising:
a body having a triangular cross section and defining a triangular shaped cavity comprising:
a temperature depressant metal having a liquidus point under 540° C;
an aluminum alloy comprising aluminum and silicon coupled onto at least one side of the temperature depressant metal; and
a flux having cesium and an active temperature below that of the liquidus point of the brazing material, and wherein the flux is one of: a core for the brazing material and a coating for the brazing material.

13. The brazing material of claim 12, wherein any one or more of the following occur:
a. the temperature depressant metal is a zinc alloy;
b. a liquidus temperature of the brazing material is about 488°C; and
c. the brazing material is formed into one of a strip, wire, a preform, washer, and ring.

14. A method of making a brazing material comprising the steps of:
providing an aluminum alloy comprising aluminum and silicon;
coupling a zinc alloy to the aluminum alloy to at least one side of the aluminum alloy; and
producing the zinc alloy and aluminum alloy in a form of one of a strip, wire, rod, washer, and ring having a triangular cross section and defining a triangularly shaped cavity.

15. The method of claim 14, further comprising any one or more of the following:
a. a second coupling step wherein a flux is coupled to the aluminum alloy;
b. an encapsulating step, wherein a flux is encapsulated in a core of the brazing material;
c. a coating step to apply flux so as to coat the brazing material;
d. the coupling step includes one of: coating the zinc alloy onto the aluminum alloy, wrapping the zinc alloy onto the aluminum alloy, and cladding the zinc alloy onto the aluminum alloy; and
e. a fabricating step wherein at least one oxide removal agent is added to the brazing material.
